# EUROPEAN PATENT APPLICATION

(11) **EP 4 344 833 A1**
(43) Date of publication of application: **03.04.2024**
(21) Application number: 23200203.0
(22) Date of filing: 27.09.2023
(51) Int. Cl.: B25J 9/10, B25J 13/08, B25J 19/00

(54) **ROBOT AND CONTROL METHOD FOR ROBOT**

(30) Priority: 29.09.2022 JP 2022156946
(71) Applicant: Seiko Epson Corporation, Tokyo 160-8801 (JP)
(72) Inventor: SAKAMACHI, Junki, Suwa-shi, Nagano, 392-8502 (JP); TOSHIMITSU, Shunsuke, Suwa-shi, Nagano, 392-8502 (JP)
(74) Representative: MERH-IP Matias Erny Reichl Hoffmann Patentanwälte PartG mbB

(57) **Abstract**

A robot (1) includes: a first structure (21); a second structure (23) provided rotatably relatively to the first structure (21); a drive source (M) that is arranged at the first structure (21) and drives the second structure (23) to rotate relatively to the first structure; a speed reducer (3) that has an input shaft (35) coupled to the drive source (M), an output shaft (32) coupled to the second structure (23), and a gear unit (33) installed between the input shaft (35) and the output shaft (32), and that decelerates rotation of the drive source (M) and transmits the decelerated rotation to the second structure (23); and a load application unit (7) that applies a load to the output shaft (32) when a rotational speed of the input shaft (35) is equal to or lower than a predetermined value (C).

## Description

The present application is based on, and claims priority from JP Application Serial Number 2022-156946, filed September 29, 2022, the disclosure of which is hereby incorporated by reference herein in its entirety.

### BACKGROUND

### 1. Technical Field

The present disclosure relates to a robot and a control method for a robot.

### 2. Related Art

A robot described in JP-A-2005-177914 has a base, an arm that rotates in relation to the base, a motor that rotates the arm, and a speed reducer provided between the base and the arm. The speed reducer has an input shaft, an output shaft, and a gear train, and reduces the rotational speed of the input shaft via the gear train and outputs the reduced speed from the output shaft. In such a speed reducer, backlash or so-called play is present between the gears of the gear train.

However, in the robot described in JP-A-2005-177914, when stopping the drive of the robot arm, even if the motor stops, the robot arm makes a slightly redundant rotation by the amount of the play based on the backlash. This poses a problem in that the position accuracy of the robot arm drops.

### SUMMARY

According to an aspect of the present disclosure, a robot includes: a first structure; a second structure provided rotatably relatively to the first structure; a drive source that is arranged at the first structure and drives the second structure to rotate relatively to the first structure; a speed reducer that has an input shaft coupled to the drive source, an output shaft coupled to the second structure, and a gear unit installed between the input shaft and the output shaft, and that decelerates rotation of the drive source and transmits the decelerated rotation to the second structure; and a load application unit that applies a load to the output shaft when a rotational speed of the input shaft is equal to or lower than a predetermined value.

According to another aspect of the present disclosure, a control method for a robot is provided. The robot includes: a first structure; a second structure provided rotatably relatively to the first structure; a drive source that is arranged at the first structure and drives the second structure to rotate relatively to the first structure; and a speed reducer that has an input shaft coupled to the drive source, an output shaft coupled to the second structure, and a gear unit installed between the input shaft and the output shaft, and that decelerates rotation of the drive source and transmits the decelerated rotation to the second structure. The control method includes: a first step of acquiring information about a rotational speed of the input shaft; a second step of determining whether the rotational speed of the input shaft is equal to or lower than a predetermined value, or not; and a third step of applying a load to the output shaft when the rotational speed of the input shaft is equal to or lower than the predetermined value.

### BRIEF DESCRIPTION OF THE DRAWINGS

FIG. 1 is an overall view of a robot system according to a first embodiment.
FIG. 2 is a cross-sectional view of a robot.
FIG. 3 is a longitudinal cross-sectional view of a brake unit, which is a load application unit.
FIG. 4 is a longitudinal cross-sectional view of the brake unit.
FIG. 5 is a cross-sectional view taken along a line B-B in FIG. 3.
FIG. 6 is a cross-sectional view taken along a line B'-B' in FIG. 4.
FIG. 7 is a view from the direction of an arrow C in FIG. 5.
FIG. 8 is a block diagram of a robot system according to a second embodiment.
FIG. 9 is a schematic configuration view of a brake unit provided in the robot system shown in FIG. 8.
FIG. 10 is a flowchart for explaining a control method for the robot shown in FIG. 8.

### DESCRIPTION OF EMBODIMENTS

The robot and the control method for the robot according to the present disclosure will now be described in detail, based on embodiments illustrated in the accompanying drawings.

### First Embodiment

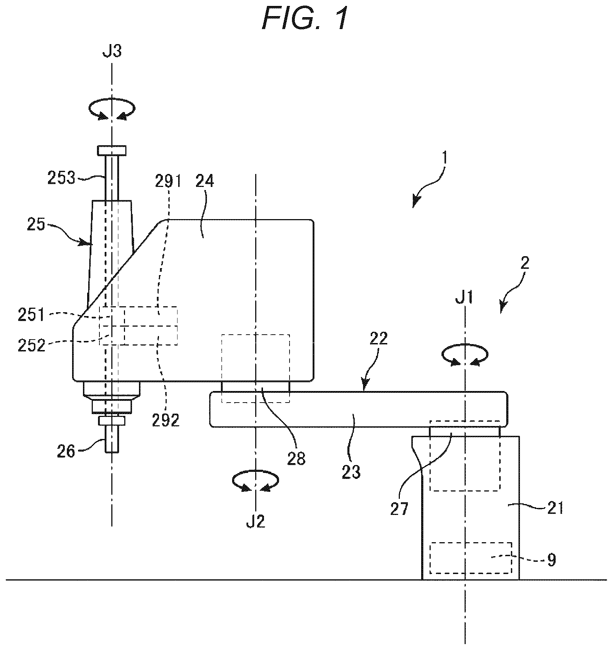

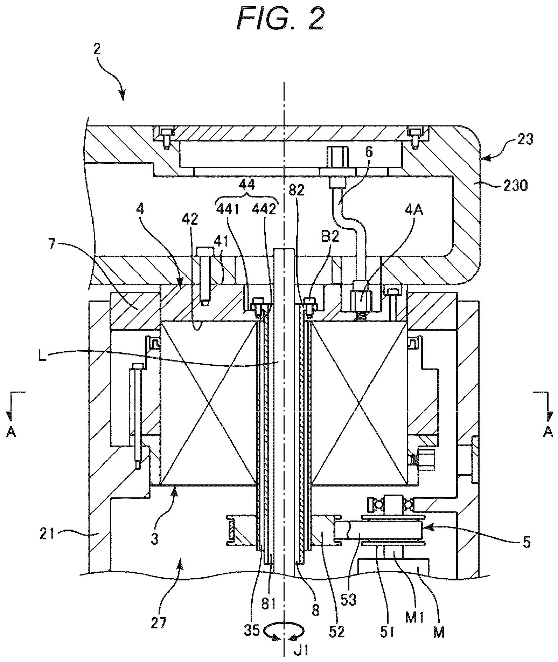

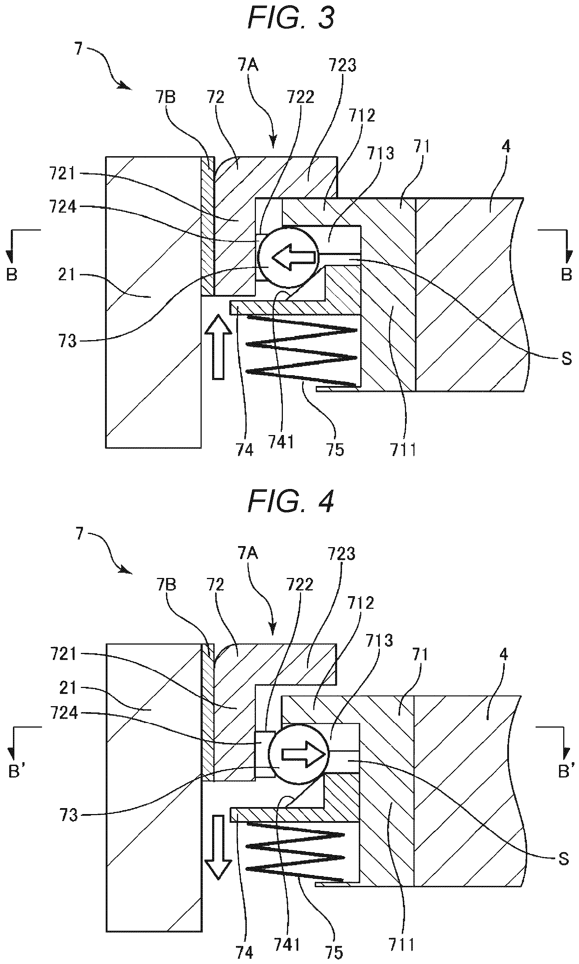

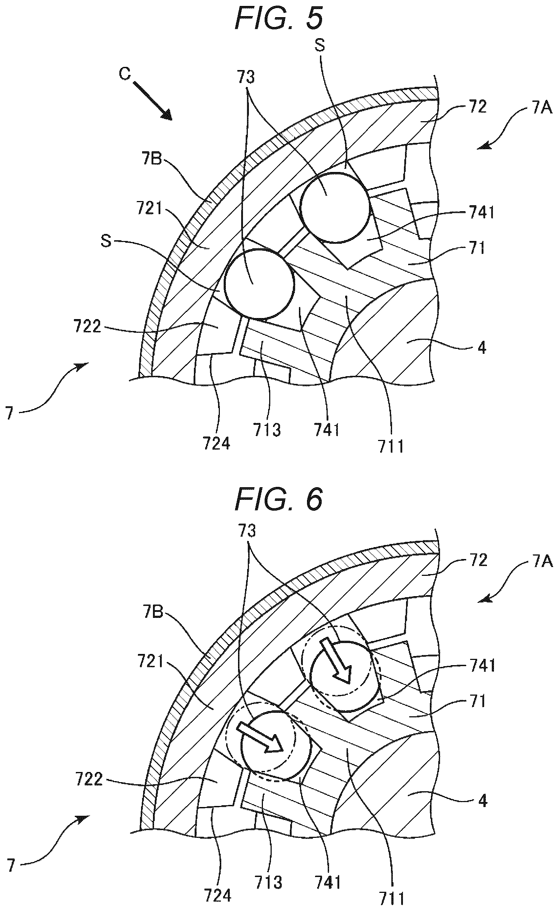

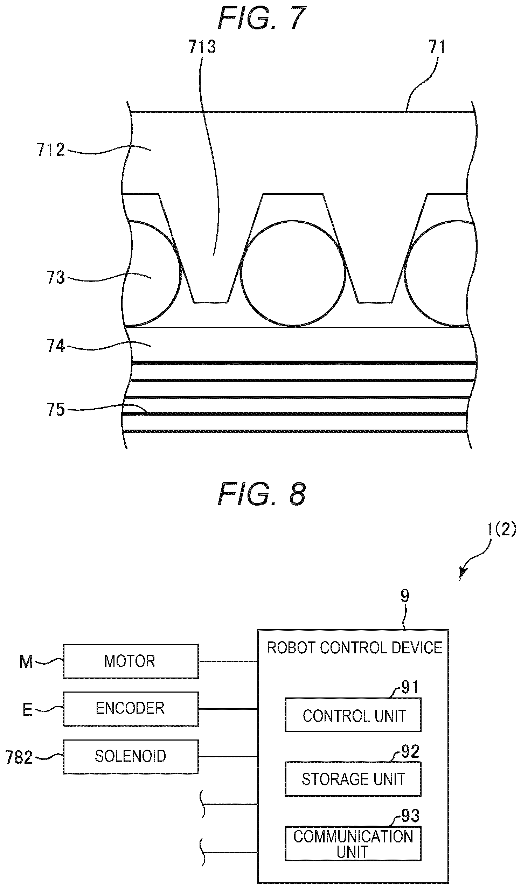

FIG. 1 is an overall view of a robot system according to a first embodiment. FIG. 2 is a cross-sectional view of a robot. FIG. 3 is a longitudinal cross-sectional view of a brake unit, which is a load application unit. FIG. 4 is a longitudinal cross-sectional view of the brake unit. FIG. 5 is a cross-sectional view taken along a line B-B in FIG. 3. FIG. 6 is a cross-sectional view taken along a line B'-B' in FIG. 4. FIG. 7 is a view from the direction of an arrow C in FIG. 5.

An up-down direction in FIGS. 1 and 2 coincides with the vertical direction. The upper side in FIGS. 1, 2, 3, 4, and 7 is also referred to as up. The lower side is also referred to as down. In this specification, the meaning of the term "vertical" includes not only the case where something is perfectly vertical but also the case where something is inclined slightly, for example, within ±10°, in relation to the vertical direction. Also, in this specification, the meaning of the term "parallel" includes not only the case where two objects are perfectly parallel to each other but also the case where two objects are inclined slightly, for example, within ±10°, in relation to each other.

A robot system 1 shown in FIG. 1 has a robot 2 and a robot control device 9 that controls the drive of the robot 2.

### Robot 2

The robot 2 in this embodiment is a SCARA robot and is used for various tasks, for example, holding, conveyance, assembly, and inspection or the like of a workpiece such as an electronic component. However, the use of the robot 2 is not particularly limited. The robot 2 may also be a robot other than the SCARA robot, for example, a 6-axis multi-joint robot, a dual-arm robot, and the like.

As shown in FIG. 1, the robot 2 has a base 21 and a robot arm 22 coupled rotatably in relation to the base 21. The robot arm 22 has a first arm 23 having a proximal end part coupled to the base 21 and rotating about a first axis of rotational movement J1 along the vertical direction, in relation to the base 21, and a second arm 24 having a proximal end part coupled to a distal end part of the first arm 23 and rotationally moving about a second axis of rotational movement J2 along the vertical direction, in relation to the first arm 23. In this embodiment, the base 21 is equivalent to a first structure and the first arm 23 is equivalent to a second structure.

A work head 25 is provided at a distal end part of the second arm 24. The work head 25 has a spline nut 251 and a ball screw nut 252 arranged coaxially at the distal end part of the second arm 24, and a spline shaft 253 inserted in the spline nut 251 and the ball screw nut 252. The spline shaft 253 is rotatable about a third axis of rotational movement J3, which is the center axis of the spline shaft 253 and laid along the vertical direction, in relation to the second arm 24, and can move up and down along the spline shaft 253.

An end effector 26 is installed at a lower end part of the spline shaft 253. As the end effector 26, an end effector that is attachable and removable and suitable for the target task is selected.

The robot 2 has a first joint actuator 27 coupling the base 21 and the first arm 23 together and causing the first arm 23 to rotationally move about the first axis of rotational movement J1 in relation to the base 21, and a second joint actuator 28 coupling the first arm 23 and the second arm 24 together and causing the second arm 24 to rotationally move about the second axis of rotational movement J2 in relation to the first arm 23. The robot 2 also has a first drive mechanism 291 rotating the spline nut 251 to rotate the spline shaft 253 about the third axis of rotational movement J3, and a second drive mechanism 292 rotating the ball screw nut 252 to move the spline shaft 253 up and down in a direction along the third axis of rotational movement J3.

The first joint actuator 27 will now be described in detail. As shown in FIG. 2, the first joint actuator 27 has a speed reducer 3 coupling the base 21 and the first arm 23 together, an adaptor 4 provided between the speed reducer 3 and the first arm 23, a motor M, which is a drive source, and a motive power transmission mechanism 5 coupling the motor M and the speed reducer 3 together.

The speed reducer 3 is fixed to the base 21 and transmits a drive force of the motor M to the first arm 23. As shown in FIG. 2, the speed reducer 3 has a casing cylinder 30, an input shaft 35, a gear unit 33 accommodated in the casing cylinder 30, and an output unit 32, which is an output shaft. The casing cylinder 30, the gear unit 33, and the output unit 32 are not illustrated.

The gear unit 33 has a plurality of gears and meshes with each of the input shaft 35 and the output unit 32. As the input shaft 35 rotates based on the drive force from the motor M, the rotation is decelerated by the gear unit 33 and is outputted from the output unit 32, which is the output shaft. Thus, a torque proportional to the reduction ratio can be acquired at the output side.

The speed reducer 3 is not limited to the illustrated configuration. For example, the input shaft 35 may be omitted from the speed reducer 3 and the speed reducer 3 may be configured in such a way that the drive force of the motor M rotates the gear unit 33. The speed reducer 3 is not limited to the above configuration and may be, for example, an eccentric oscillating speed reducer, a planetary gear speed reducer, a strain wave gear speed reducer, or the like.

The motive power transmission mechanism 5 transmits the drive force of the motor M, which is the motive power source, to the input shaft 35 of the speed reducer 3. The motive power transmission mechanism 5 has a first pulley 51 coupled to an output shaft M1 of the motor M, a second pulley 52 coupled to the input shaft 35 of the speed reducer 3, and an endless belt 53 laid between the first pulley 51 and the second pulley 52. However, the configuration of the motive power transmission mechanism 5 is not particularly limited. The motive power transmission mechanism 5 may be omitted and the output shaft M1 of the motor M may be directly coupled to the input shaft 35 of the speed reducer 3.

As shown in FIG. 2, the adaptor 4 is provided between the speed reducer 3 and the first arm 23. The adaptor 4 is disk-shaped and has an upper surface 41 and a lower surface 42 in a front-back relationship. The upper surface 41 is a surface facing the first arm 23. The lower surface 42 is a surface facing the speed reducer 3. The adaptor 4 is fixed to a casing 230 of the first arm 23 at the upper surface 41 and is fixed to the output unit 32 of the speed reducer 3 at the lower surface 42. The adaptor 4 is fixed to the output unit 32, which is the output shaft of the speed reducer 3, and therefore can be said to be the output shaft of the speed reducer 3 in a broad sense. Therefore, hereinafter the adaptor 4 is described as the output shaft of the speed reducer 3.

The adaptor 4 is fastened with a screw to each of the first arm 23 and the speed reducer 3. However, the fixing method for the adaptor 4 is not particularly limited.

The adaptor 4 has a first hole 43 penetrating the adaptor 4 from the upper surface 41 to the lower surface 42. The first hole 43 has a first recess 431 opening to the upper surface 41 and having a closed bottom, and a first penetration hole 432 penetrating the adaptor 4 from the bottom surface of the first recess 431 to the lower surface 42 and having a smaller opening than the first recess 431. The first hole 43 overlaps an opening of a supply hole 323 as viewed in a plan view from a direction along the first axis of rotational movement J1. The first penetration hole 432 communicates with the supply hole 323.

The adaptor 4 also has a first joint 4A coupled to the first penetration hole 432. The first joint 4A is accommodated in the first recess 431. That is, an upper end of the first joint 4A is located at a lower position than the upper surface 41 of the adaptor 4. Since the first joint 4A is thus prevented from protruding from the upper surface 41 of the adaptor 4, the first joint 4A can be effectively prevented from interfering with the base 21 and the first arm 23 and damaging these parts or from obstructing the assembly work and making it difficult to assemble the speed reducer 3, for example, when assembling the robot 2 according to procedures as described later.

One end part of a tube 6 is coupled to the first joint 4A. To replace a lubricant G inside the speed reducer 3, a lubricant G is supplied into the speed reducer 3 from the supply hole 323 via the tube 6. As the new lubricant G is thus supplied, the old lubricant G inside the speed reducer 3 is discharged from a discharge hole 361. Using the tube 6 in this way makes it easier to supply the lubricant G to the speed reducer 3.

The adaptor 4 also has a second hole 44 penetrating the adaptor 4 from the upper surface 41 to the lower surface 42. The second hole 44 has a second recess 441 opening to the upper surface 41 and having a closed bottom, and a second penetration hole 442 penetrating the adaptor 4 from the bottom surface of the second recess 441 to the lower surface 42 and having a smaller opening than the second recess 441. The second hole 44 is arranged coaxially with the first axis of rotational movement J1.

A cylinder unit 8 is inserted in the second hole 44 from the upper surface 41 side. The cylinder unit 8 has a cylindrical main body 81 and a flange 82 formed at an upper end part of the main body 81. The main body 81 is smaller in diameter than the second penetration hole 442, is inserted in the second hole 44 and the speed reducer 3, and penetrates the speed reducer 3. In contrast, the flange 82 is larger in diameter than the second penetration hole 442 and therefore cannot pass through the second penetration hole 442 and abuts against the bottom surface of the second recess 441. The cylinder unit 8 is fixed to the bottom surface of the second recess 441 with a screw B2 at the flange 82.

The first joint actuator 27 has been described above. In such a speed reducer 3, backlash or so-called play is present at each member. Particularly in the gear unit 33, play is present at the meshing part between gears. Due to this play, each gear smoothly rotates but the robot arm 22 makes a slightly redundant rotation by the amount of the play even if the motor M stops when stopping the robot arm 22 in operation, for example, when stopping the rotation of the first arm 23 in relation to the base 21. Therefore, the position accuracy of the robot arm 22 drops.

According to the embodiment, the slightly redundant rotation due to the play is cancelled and the position accuracy of the robot arm 22 can thus be increased. This feature will now be described.

As shown in FIGS. 2, 3 to 7, the adaptor 4 is installed at an upper end part of the base 21, and a brake unit 7, which is a load application unit, is provided between the adaptor 4 and the base 21. The brake unit 7 has a function of applying a load to the adaptor 4, which is the output shaft, when the rotational speed of the input shaft 35 is equal to or lower than a predetermined value.

The brake unit 7 has an engagement and release unit 7A formed of a so-called clutch that is engaged and released according to the rotational speed of the adaptor 4, and a brake element 7B that applies a load to the adaptor 4 when the engagement and release unit 7A is in an engaged state. When the engagement and release unit 7A is in the engaged state, that is, when the clutch is engaged, a load is applied to the adaptor 4. When the engagement and release unit 7A is in a released state, that is, when the clutch is released, no load is applied.

As shown in FIGS. 3 to 6, the engagement and release unit 7A has a ring-shaped first member 71 coupled to the adaptor 4, a ring-shaped second member 72 arranged at an outer circumference of the first member 71 and concentrically with the first member 71, a plurality of balls 73 arranged along a circumferential direction of the first member 71 between the first member 71 and the second member 72, a ball bearing ring 74 arranged below the balls 73, and an energizing member 75 that energizes the ball bearing ring 74 upward.

The first member 71 has a cylindrical part 711 fixed to the outer circumference surface of the adaptor 4, a flange part 712 provided at an upper end part of the cylindrical part 711, and a plurality of protrusions 713 protruding radially outward from an outer circumferential part of the cylindrical part 711. Each protrusion 713 is located below the flange part 712.

As shown in FIGS. 5 and 6, each protrusion 713 extends along a radial direction of the first member 71. The protrusions 713 are provided at equal intervals along a circumferential direction of the cylindrical part 711. As shown in FIG. 7, the protrusion 713 protrudes downward from the lower surface of the flange part 712 and is tapered in width as it goes downward.

In the first member 71, an inner circumferential part of the cylindrical part 711 is fixed to the adaptor 4. Therefore, the first member 71 rotates with the adaptor 4.

As shown in FIGS. 3 and 4, the second member 72, which is an outer ring, is installed at an outer circumferential part of the first member 71, which is an inner ring. The second member 72 has a cylindrical part 721, a plurality of protrusions 722 protruding toward the center axis from an inner circumferential part of the cylindrical part 721, and a top plate 723 covering the upper side of each protrusion 722.

Each protrusion 722 extends along a radial direction of the second member 72. The protrusions 722 are provided at equal intervals along a circumferential direction of the cylindrical part 721. The protrusion 722 in a shape tapered in width as it goes toward the center axis, as viewed from the direction of the center axis of the second member 72. The number of the protrusions 722 is the same as the number of the protrusions 713.

The top plate 723 is located above the flange part 712 of the first member 71. As shown in FIG. 3, in the engaged state, described later, the top plate 723 interferes with the flange part 712 of the first member 71.

As shown in FIGS. 5 and 6, the protrusion 713 of the first member 71 and the protrusion 722 of the second member 72 are at the same position in terms of a circumferential direction of the engagement and release unit 7A. The ball 73 is accommodated between a pair of neighboring protrusions 713 and a pair of neighboring protrusions 722. The space demarcated by these protrusions is an accommodation space S. In the accommodation space S, the ball 73 can move in a radial direction of the engagement and release unit 7A, that is, in the direction of protrusion of the protrusion 713 and the protrusion 722. The ball 73 can be in a state of being located on the first member 71 side in the accommodation space S, as shown in FIG. 6, and in a state of being located on the second member 72 side in the accommodation space S, as shown in FIG. 5. This feature will be described in detail later.

The ball bearing ring 74 is provided below the protrusion 722 and spaced apart from the protrusion 722. The ball bearing ring 74 has a sloped surface 741 sloped downward as it goes away from the center axis of the engagement and release unit 7A. The ball 73 is in contact with the sloped surface 741. Due to the upward energization of the ball bearing ring 74, the ball 73 is energized outward, that is, in a direction away from the center axis of the ball bearing ring 74.

Such a ball bearing ring 74 is configured to be movable in an up-down direction along the outer circumferential part of the cylindrical part 711 of the first member 71.

The energizing member 75 energizes the ball bearing ring 74 upward. In the illustrated configuration, the energizing member 75 is formed of a coil spring. However, the energizing member 75 is not limited to this configuration and may be formed of, for example, a leaf spring, a rubber bush or the like.

The brake element 7B in this embodiment is formed of a ring-shaped or cylindrical brake pad. The brake element 7B is fixed at an outer circumferential part thereof to the base 21. The cylindrical part 721 of the second member 72 is in contact with an inner circumferential part of the brake element 7B. The second member 72 is rotatable in the state of being in contact with the brake element 7B.

The material forming the brake element 7B is not particularly limited. For example, various friction materials, a woven fabric, a non-woven fabric, a metal plate, a resin plate, a ceramic plate or the like can be employed.

Unlike the illustrated configuration, an electromagnetic brake may be used instead of the brake element 7B. In this case, no brake is applied at the start of operation and the brake can be applied at the time of stop operation. Therefore, the position accuracy of the stop position can be increased more effectively.

Such an engagement and release unit 7A can be in the engaged state, where the first member 71 and the second member 72 are coupled together as shown in FIGS. 3 and 5, and the released state, where the coupling of the first member 71 and the second member 72 is cancelled as shown in FIGS. 4 and 6. The switching between the engaged state and the released state is made according to the rotational speed of the input shaft 35. In other words, the switching between the engaged state and the released state is made according to the rotational speed of the adaptor 4, which is the output shaft.

### Released State: FIGS. 4 and 6

When the adaptor 4 rotates in a predetermined direction, the first member 71, too, rotates in the same direction and at the same speed as the adaptor 4. In the engaged state, the ball 73 in FIG. 6 is located at a position indicated by a dashed line, whereas in the released state, the ball 73 is located at a position indicated by a solid line. When the adaptor 4 is accelerated in such a way that the rotational speed of the adaptor 4 exceeds a predetermined value, that is, a threshold C, a large acceleration due to inertia is generated between the first member 71, which is fixed to the adaptor 4, and the second member 72, which is not directly fixed to the adaptor 4, and the second member 72 rotates relatively to the first member 71 and the ball 73. The ball 73 is pushed by the second member 72 and thus receives a force. However, a lateral surface 724 of the second member 72 is sloped in relation to the radial direction and therefore the ball 73 moves in the direction of an arrow in FIG. 6 along the lateral surface 724, that is, inward along the radial direction. Thus, the ball 73 is released from the protrusion 722 side of the second member 72 and moves into between the neighboring protrusions 713, 713 of the first member 71. In this state, the ball 73 presses the sloped surface 741 as shown in FIG. 4. Due to this pressing, the ball bearing ring 74 moves downward against the energizing force of the energizing member 75. Thus, the force pushing the first member 71 to the top plate 723 of the second member 72 weakens and the contact pressure between the flange part 712 of the first member 71 and the top plate 723 of the second member 72 weakens. Therefore, the first member 71 does not interfere with the second member 72 and runs idle in relation to the second member 72. Consequently, the first member 71 and the adaptor 4 can rotate without receiving a load from the second member 72 coupled to the brake element 7B.

In such a released state, the adaptor 4, the first member 71, and the ball 73 rotate, whereas the second member 72 is stopped or rotates at a lower speed than the first member 71.

If the first member 71 continues rotating at a rotational speed higher than the threshold C, the ball 73, when trying to return to the second member 72 side, collides with the distal end or the inner surface of the protrusion 722 and therefore does not move to the second member 72 side.

The threshold C can be suitably set, based on the fundamental structure of the brake unit 7 and the selection of various conditions such as the shape, dimension, weight, and material of each component forming the brake unit 7. The threshold can be, for example, approximately 10 to 300 rpm.

### Engaged State: FIGS. 3 and 5

Meanwhile, when the rotational speed of the adaptor 4 is equal to or lower than the threshold C, the relative acceleration of the second member 72 decreases and the ball 73 is less likely to collide with the distal end or the inner surface of the protrusion 722. Therefore, the ball 73 is pressed outward along the radial direction by the sloped surface 741 of the ball bearing ring 74, that is, toward the second member 72, due to the energizing force of the energizing member 75. The ball 73 thus moves toward the second member 72, enters the space between the neighboring protrusions 722, 722 of the second member 72, and creates the engaged state. That is, as shown in FIG. 3, due to the energizing force of the energizing member 75, the ball 73 presses the flange part 712 upward, and the flange part 712 is pushed to the top plate 723 of the second member 72. Thus, the first member 71 and the second member 72 interfere with each other. Due to the frictional force between the two members, the rotational force of the first member 71 is transmitted to the second member 72. Both the first member 71 and the second member 72 thus rotate. In this rotation, the second member 72 rotates in the same direction as the first member 71. However, since the second member 72 is in contact with the brake element 7B, the second member 72 rotates at a lower rotational speed than the first member 71.

In such an engaged state, the load of the brake element 7B is transmitted to the first member 71 via the second member 72, and the load is applied to the adaptor 4, which is the output shaft. This load is a small load that has little influence on the rotational speed of the adaptor 4, for example, a load that causes a drop of approximately 0.3 to 2%, particularly a drop of approximately 0.5 to 1.2%, in the rotational speed of the adaptor 4.

In the case of gradually decelerating and stopping the robot arm 22 in the state where the robot arm 22 operates with the rotational speed of the adaptor 4 exceeding the threshold C, that is, in the state where the first arm 23 rotates in relation to the base 21, when the rotational speed of the adaptor 4 becomes equal to or lower than the threshold C, the first member 71 and the second member 72 interfere with each other. The engagement and release unit 7A enters into the engaged state. A load in the direction opposite to the direction of rotation is applied to the adaptor 4 by the brake element 7B. That is, a load in the direction opposite to the direction in which the adaptor 4 is to rotate is applied to the adaptor 4, which is the output shaft. In other words, since the load is applied, the gears mesh with each other so that the play at each gear or the like of the gear unit 33 of the speed reducer 3 is eliminated, and therefore the backlash of the speed reducer 3 is cancelled. As the robot arm 22 stops in the state where the backlash of the speed reducer 3 is cancelled, the robot arm 22 can stop accurately at a target stop position. Thus, the position accuracy of the robot arm 22 can be increased.

As described above, the threshold C of the rotational speed at which the engagement and release unit 7A switches between engagement and release is a relatively small value. Therefore, the timing when the engagement and release unit 7A enters into the engaged state and the load acts on the adaptor 4 is immediately before the robot arm 22 stops, that is, immediately before the first arm 23 stops rotating in relation to the base 21. In this example, the term "immediately before" refers to, for example, 0.01 seconds or longer and 1 second or shorter before the stop.

In this case, as described above, the load applied to the adaptor 4 by the brake unit 7 when stopping the robot arm 22 is a small load and the time for which the load is applied, that is, the time until the stop, is a short time. Therefore, the application of the load does not adversely affect the stop position of the robot arm 22.

When causing the stopped robot arm 22 to operate again, the load is still applied to the adaptor 4. However, the load is small and therefore does not adversely affect the start of the operation of the robot arm 22.

As described above, the robot 2 has: the base 21, which is an example of a first structure; the first arm 23, which is an example of a second structure, arranged at the base 21 and provided rotatably relatively to the base 21; the motor M, which is a drive source that drives the first arm 23 to rotate relatively to the base 21; the speed reducer 3 having the input shaft 35 coupled to the motor M, the adaptor 4, which is the output shaft coupled to the first arm 23, and the gear unit 33 installed between the input shaft 35 and the adaptor 4, the speed reducer 3 decelerating the rotation of the motor M, which is the drive source, and transmitting the decelerated rotation to the first arm 23; and the brake unit 7, which is a load application unit that applies a load to the adaptor 4 when the rotational speed of the input shaft 35 is equal to or lower than the threshold C, which is a predetermined value. Thus, when the robot arm 22 stops, the robot arm 22 can be stopped in the state where the backlash of the gear unit 33 is cancelled. Therefore, the position accuracy of the robot arm 22, particularly the position repeat accuracy, can be increased.

In the above description, the first structure is the base 21 and the second structure is the first arm 23. However, this configuration is not limiting. For example, the first structure may be the first arm 23 and the second structure may be the base 21. The first structure may be the first arm 23 and the second structure may be the second arm 24. The first structure may be the second arm 24 and the second structure may be the first arm 23. The first structure may be the second arm 24 and the second structure may be the work head 25.

In the above description, a configuration where the motor M, the speed reducer 3, and the brake unit 7 are provided on the base 21 side, that is, on the first structure side, is described. However, the present disclosure is not limited to this configuration. A configuration where at least one of the motor M, the speed reducer 3, and the brake unit 7 is provided on the first arm 23 side, that is, on the second structure side, may be employed.

In the above description, the robot 2 is described as a SCARA robot. However, the present disclosure is not limited to this example. Other robots than the SCARA robot, for example, a 6-axis multi-joint robot, a dual-arm robot, and the like may be employed.

The brake unit 7 applies a load in the direction opposite to the direction in which the adaptor 4, which is the output shaft, rotates, immediately before the first arm 23, which is an example of the second structure, stops rotating in relation to the base 21, which is an example of the first structure. Such a configuration enables easy and accurate application of a load, compared with a configuration where a load is applied along the direction in which the adaptor 4 rotates, when the first arm 23 stops rotating.

Since the load is applied immediately before the first arm 23 stops rotating, the time for which the load is applied, that is, the time until the stop, is short, and the load is relatively small. Therefore, the application of the load does not adversely affect the stop position of the robot arm 22, and the robot arm 22 can be stopped at the accurate position.

However, the present disclosure is not limited to this configuration. A configuration where a load is applied along the direction in which the adaptor 4 rotates, immediately before when the first arm 23 stops rotating, may be employed. As the load is thus applied in the direction of movement to the adaptor 4, the gears mesh with each other and the backlash of the speed reducer 3 is cancelled as in the foregoing configuration. In this case, the adaptor 4 moves a predetermined distance in the direction of movement, compared with the foregoing configuration. However, the motor M can be controlled, taking the distance moved in the direction of movement into consideration. Thus, the robot arm 22 can be stopped at the accurate position.

As described above, the brake unit 7 has the engagement and release unit 7A, which is engaged or released according to the rotational speed of the adaptor 4, which is the output shaft. The brake unit 7 applies a load to the adaptor 4 in the state where the engagement and release unit 7A is engaged. Thus, a load can be applied to the adaptor 4 easily and accurately with a simple configuration without performing electrical control.

As described above, the engagement and release unit 7A has: the ring-shaped first member 71 coupled to the adaptor 4, which is the output shaft; the ring-shaped second member 72 installed at the outer circumference of the first member 71 and coupled to the brake element 7B; and the plurality of balls 73 installed along the circumferential direction between the first member 71 and the second member 72 and configured to be able to move in the radial direction of the first member 71. The switching between engagement and release is made according to the position of the balls 73 in the radial direction. Thus, the foregoing effect can be achieved easily and securely with a simple configuration where the switching between engagement and release is made, utilizing the magnitude of the relative acceleration corresponding to the rotational speed.

Apart from the engagement and release unit 7A, the robot arm 22 may have a torque limiter. In this case, the engagement and release unit 7A and the torque limiter apply a load to the adaptor 4 at different timings from each other.

### Second Embodiment

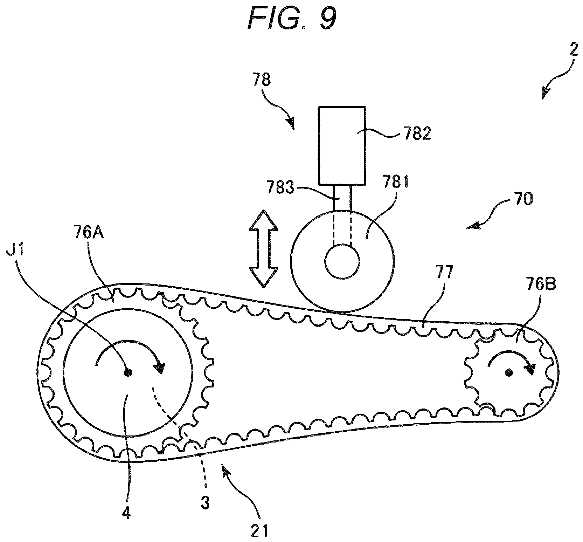

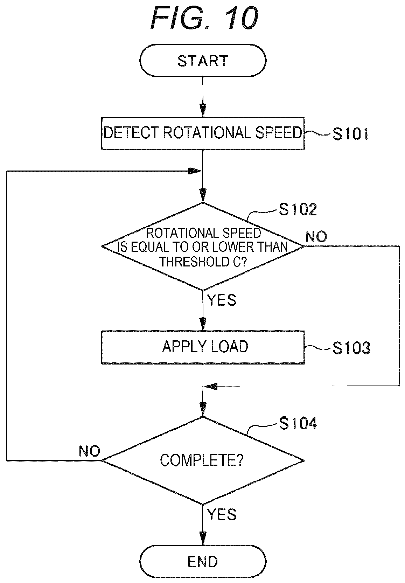

FIG. 8 is a block diagram of a robot system according to a second embodiment. FIG. 9 is a schematic configuration view of a brake unit provided in the robot system shown in FIG. 8. FIG. 10 is a flowchart for explaining a control method for a robot shown in FIG. 8.

The second embodiment of the robot according to the present disclosure will now be described with reference to these drawings. In the description below, the difference from the first embodiment is mainly described and the description of similar matters is omitted.

The robot system according to the second embodiment has a robot control device 9. As shown in FIG. 8, the robot control device 9 has a function of controlling the drive of the robot 2 and is electrically coupled to each part of the robot 2 that is described above. The robot control device 9 has a control unit 91, a storage unit 92, and a communication unit 93. These units are communicatively coupled to each other, for example, via a bus.

The control unit 91 is formed of, for example, a CPU (central processing unit). The control unit 91 reads out and executes various programs such as an operation program stored in the storage unit 92. A signal generated by the control unit 91 is transmitted to each part of the robot 2 via the communication unit 93. A signal from each part of the robot 2 is received by the control unit 91 via the communication unit 93. The signal received by the control unit 91 is subjected to predetermined processing and stored in the storage unit 92 or used to control the operation of the robot arm 22, or the like. Such a control unit 91 enables the robot arm 22 to execute a predetermined task under a predetermined condition.

The storage unit 92 saves various programs or the like to be executed by the control unit 91. Particularly, the storage unit 92 stores various data such as the threshold C, and a control program to compare the current rotational speed of the input shaft 35 with the threshold C and control the operation of a tensioner 78 accordingly, or the like. In this case, the threshold C may be rewritable, or may be selectable from a plurality of different thresholds C.

As the storage unit 92, for example, a configuration having a volatile memory such as a RAM (random-access memory), a non-volatile memory such as a ROM (read-only memory), a removable external storage device or the like may be employed.

The communication unit 93 transmits and receives a signal to and from another device, for example, using an external interface such as a wired LAN (local area network) or a wireless LAN. In this case, the communication unit 93 may perform communication via a server, not illustrated, or may perform communication via a network such as the internet.

Such a robot control device 9 is installed in the base 21, as shown in FIG. 1. However, the robot control device 9 is not limited to this configuration and may be installed at a position away from the robot 2.

The robot 2 has an encoder E as a detector that can chronologically detect position information of the motor M, that is, the amount of rotation including forward and backward rotations, and the angular velocity. As the encoder E, for example, a rotary encoder can be used.

The encoder E is electrically coupled to the robot control device 9. The position information of the motor M detected by the encoder E is transmitted as an electrical signal to the robot control device 9. Based on this position information, the robot control device 9 outputs a control signal to a motor driver, not illustrated, to drive the motor M.

The encoder E is configured to detect the position information of the motor M. However, the encoder E can also be said to be a detection unit that detects the rotational speed of the input shaft because the position information of the motor M corresponds to the position information of the input shaft.

The robot control device 9 can also chronologically acquire the position information of the motor M detected by the encoder E and calculate the rotational speed of the motor M, based on that information. As the rotational speed of the motor M is known, the rotational speed of the input shaft 35 of the speed reducer 3 corresponding thereto is known, too. Therefore, the encoder E can be said to be a component element of a detection unit that detects the rotational speed of the input shaft 35.

Since the reduction ratio of the speed reducer 3 is known, the encoder E may be installed on the output shaft side. The encoder E may be configured to detect, for example, the rotational speed of the adaptor 4. This is because, even in this case, the rotational speed of the input shaft 35 can be detected, based on the reduction ratio, which is known.

The robot 2 according to the second embodiment has a brake unit 70 having a different configuration from the foregoing brake unit 7.

As shown in FIG. 9, the brake unit 70 has a first wheel 76A fixed to the outer circumference of the adaptor 4, which is the output shaft, a second wheel 76B arranged spaced apart from the first wheel 76A, an endless belt 77 laid over the first wheel 76A and the second wheel 76B, and a tensioner 78 that adjusts the tension of the endless belt 77. The brake unit 70 increases the tension of the endless belt 77 via the tensioner 78 and thus applies a load to the adaptor 4.

In the illustrated configuration, both the first wheel 76A and the second wheel 76B are sprocket wheels, and the endless belt 77 is formed of a cogged belt meshing with the teeth of the first wheel 76A and the second wheel 76B. However, this configuration is not limiting. Both the first wheel 76A and the second wheel 76B may be pulleys and the endless belt 77 may be a pully belt.

The first wheel 76A is a drive wheel. The second wheel 76B is a driven wheel. When the first wheel 76A rotates in a predetermined direction, the second wheel 76B rotates in the same direction via the endless belt 77.

The tensioner 78 has a moving wheel 781 that freely rotates, and a solenoid 782 that is a drive source for moving the moving wheel 781. The moving wheel 781 is formed of, for example, an idle roller. The solenoid 782 is electrically coupled with the robot control device 9, and the drive of the solenoid 782 is controlled by the control unit 91.

The moving wheel 781 moves to and from a first position where the moving wheel 781 is pressed against the endless belt 77 and a second position where the moving wheel 781 is spaced apart from the endless belt 77. The solenoid 782 has a pin 783 that expands and contracts with the turning on and off of electricity. The moving wheel 781 is rotatably supported at a distal end part of the pin 783. The solenoid 782 is driven to cause the pin 783 to expand and contract and thus cause the moving wheel 781 to move between the first position and the second position.

The operation principle for the brake unit 70 having the tensioner 78 will now be described.

When the moving wheel 781 is located at the first position, the moving wheel 781 presses the endless belt 77 and increases the tension and thus can apply a load to the first wheel 76A and the adaptor 4 fixed thereto. When the moving wheel 781 is located at the second position, the tension of the endless belt 77 is the tension in the natural state and the application of the load is cancelled.

As described above, the operation of the solenoid 782 is controlled by the robot control device 9. The robot control device 9 calculates the rotational speed of the motor M, based on the position information of the motor M detected by the encoder E, while the robot 2 is in operation.

The rotational speed of the input shaft 35 is estimated from the rotational speed of the motor M. When it is determined that the rotational speed of the input shaft 35 exceeds the foregoing threshold C, the operation of the solenoid 782 is controlled in such a way that the moving wheel 781 is located at the second position.

Meanwhile, when it is determined that the rotational speed of the input shaft 35 is equal to or lower than the threshold C, the operation of the solenoid 782 is controlled in such a way that the moving wheel 781 is located at the first position. Thus, a load in the direction opposite to the direction in which the adaptor 4 is to rotate is applied to the adaptor 4. By such an operation of the brake unit 70, the gears mesh with each other so that the play at each gear of the gear unit 33 of the speed reducer 3 is eliminated, and therefore the backlash of the speed reducer 3 is cancelled. Thus, the position accuracy of the robot arm 22 can be increased.

As described above, the robot 2 has the encoder E, which is the detection unit detecting the rotational speed of the input shaft 35, and the control unit 91 controlling the drive of the brake unit 70 according to the result of the detection by the encoder E. Thus, when stopping the robot arm 22 by electrical control, the robot arm 22 can be stopped in the state where the backlash of the gear unit 33 is cancelled. Thus, the position accuracy of the robot arm 22, particularly the accuracy of the stop position, can be increased.

The brake unit 70 has the first wheel 76A, which is the wheel installed at the adaptor 4, which is the output shaft, the endless belt 77 laid over the first wheel 76A, and the tensioner 78 adjusting the tension of the endless belt 77. The brake unit 70 increases the tension of the endless belt 77 via the tensioner 78 and applies a load to the adaptor 4, which is the output shaft. Thus, a load can be applied to the adaptor 4 easily and accurately with a simple configuration.

In the configuration as described in this embodiment, not only the switching is made between the state where a load is applied and the state where no load is applied, but also the degree of pressing of the moving wheel 781 can be adjusted according to the rotational speed. Thus, the degree of the load can be maintained more appropriately according to the rotational speed.

This embodiment is advantageous in that the setting of the threshold C can be adjusted more easily than in the first embodiment because the brake unit 70 is driven to operate by electrical control.

This embodiment employs a configuration where the rotational speed of the input shaft 35 is found, based on the position information of the motor M detected by the encoder E. However, the present disclosure is not limited to this configuration. A configuration where the rotational speed of the input shaft 35 is found, based on the torque value of the motor M and the condition for turning on the electricity to the motor M, or the like, may be employed.

A configuration where a load is applied regardless of whether the rotational speed of the input shaft 35 is equal to or lower than the threshold C or exceeds the threshold, unlike the illustrated configuration, may be employed.

An example of the control method for the robot according to the present disclosure will now be described, using the flowchart shown in FIG. 10.

First, in step S101, the robot arm 22 is driven and the rotational speed of the input shaft 35 is detected. In this embodiment, the position information detected by the encoder E is acquired.

Next, in step S102, whether the detected rotational speed is equal to or lower than the threshold C or not is determined. When it is determined in step S102 that the detected rotational speed is equal to or lower than the threshold C, the processing shifts to step S103. When it is determined that the detected rotational speed exceeds the threshold C, the processing shifts to step S104.

In step S103, a load is applied to the adaptor 4, which is the output shaft. In this step, the operation of the solenoid 782 is controlled in such a way that the moving wheel 781 is located at the first position, as described above. Thus, a load in the direction opposite to the direction in which the adaptor 4 is to rotate is applied to the adaptor 4. By such an operation of the brake unit 70, the gears mesh with each other so that the play at each gear of the gear unit 33 of the speed reducer 3 is eliminated, and therefore the backlash of the speed reducer 3 is cancelled. Thus, the position accuracy of the robot arm 22 can be increased.

In step S104, whether the task of the robot arm 22 is complete or not is determined. When it is determined in step S104 that the task of the robot arm 22 is complete, the operation of the robot arm 22 ends. When it is determined that the task of the robot arm 22 is not complete, the processing returns to step S102 and the subsequent steps are repeated.

As described above, in the control method for the robot, the robot has: the base 21, which is an example of the first structure; the first arm 23, which is an example of the second structure provided rotatably relatively to the base 21; the motor M, which is the drive source that is arranged at the base 21 and that drives the first arm 23 to rotate relatively to the base 21; and the speed reducer 3 having the input shaft 35 coupled to the motor M, the adaptor 4, which is the output shaft coupled to the first arm 23, and the gear unit 33 installed between the input shaft 35 and the adaptor 4, the speed reducer 3 decelerating the rotation of the motor M and transmitting the decelerated rotation to the first arm 23. The control method for the robot includes: a first step of acquiring information about the rotational speed of the input shaft 35; a second step of determining whether the rotational speed of the input shaft 35 is equal to or lower than the threshold C, which is a predetermined value, or not; and a third step of applying a load to the adaptor 4 when the rotational speed of the input shaft 35 is equal to or lower than the threshold C. Thus, when the robot arm 22 stops, the robot arm 22 can be stopped in the state where the backlash of the gear unit 33 is cancelled. Therefore, the position accuracy of the robot arm 22, particularly the position repeat accuracy, can be increased.

The robot and the control method for the robot have been described above, based on the illustrated embodiments. However, the present disclosure is not limited to the embodiments. The configuration and process of each part can be replaced by any configuration and process having a similar function. Also, any other component and process may be added to the present disclosure.

## Claims

1. A robot comprising:
a first structure;
a second structure provided rotatably relatively to the first structure;
a drive source that is arranged at the first structure and drives the second structure to rotate relatively to the first structure;
a speed reducer that has an input shaft coupled to the drive source, an output shaft coupled to the second structure, and a gear unit installed between the input shaft and the output shaft, and that decelerates rotation of the drive source and transmits the decelerated rotation to the second structure; and
a load application unit that applies a load to the output shaft when a rotational speed of the input shaft is equal to or lower than a predetermined value.

2. The robot according to claim 1, wherein
the load application unit applies a load in a direction opposite to a direction in which the output shaft rotates, immediately before the second structure stops rotating in relation to the first structure.

3. The robot according to claim 1, wherein
the load application unit
has an engagement and release unit that is engaged and released according to a rotational speed of the output shaft, and
applies a load to the output shaft in a state where the engagement and release unit is engaged.

4. The robot according to claim 3, wherein
the engagement and release unit
has a ring-shaped first member coupled to the output shaft, a ring-shaped second member installed at an outer circumference of the first member and coupled to a brake element, and a plurality of balls installed along a circumferential direction between the first member and the second member and configured to be able to move in a radial direction of the first member, and
switches between engagement and release according to a position of the balls in the radial direction.

5. The robot according to claim 1, further comprising:
a detection unit that detects the rotational speed of the input shaft; and
a control unit that controls drive of the load application unit according to a result of detection by the detection unit.

6. The robot according to claim 5, wherein
the load application unit
has a wheel installed at the output shaft, an endless belt laid over the wheel, and a tensioner that adjusts a tension of the endless belt, and
applies a load to the output shaft by having the tensioner increase the tension of the endless belt.

7. A control method for a robot, the robot comprising: a first structure; a second structure provided rotatably relatively to the first structure; a drive source that is arranged at the first structure and drives the second structure to rotate relatively to the first structure; and a speed reducer that decelerates rotation of the drive source and transmits the decelerated rotation to the second structure,
the control method comprising:
a first step of acquiring information about a rotational speed of an input shaft of the speed reducer;
a second step of determining whether the rotational speed of the input shaft is equal to or lower than a predetermined value, or not; and
a third step of applying a load to an output shaft of the speed reducer when the rotational speed of the input shaft is equal to or lower than the predetermined value.
